# Europäisches Patentamt

# European Patent Office

# Office européen des brevets

(11) Veröffentlichungsnummer: **0 017 761**
A1

(12) ## EUROPÄISCHE PATENTANMELDUNG

(21) Anmeldenummer: 80101316.0

(51) Int. Cl.³: **B 63 H 23/30**, F 16 H 41/22

(22) Anmeldetag: 13.03.80

(30) Priorität: 12.04.79 DE 2914875

(71) Anmelder: **AKTIEN-GESELLSCHAFT "WESER"**, **Werftstrasse 160 Postfach 210 280, D-2800 Bremen 21 (DE)**

(43) Veröffentlichungstag der Anmeldung: 29.10.80 **Patentblatt 80/22**

(72) Erfinder: **Meier-Peter, Hansheinrich, Dr.-Ing., Osterholzer Dorfstrasse 47b, D-2800 Bremen 44 (DE)**

(84) Benannte Vertragsstaaten: **FR GB IT NL SE**

(54) Schiffsgetriebe mit mechanischen und hydrodynamischen Elementen.

(57) Das Schiffsgetriebe besteht aus einem Zahnraduntersetzungsgetriebe (6, 2; 7, 2), aus wenigstens zwei hydrodynamischen Getrieben (10, 11; 12, 13), die wahlweise zur Übertragung des Drehmoments von der Antriebsmaschine (4, 5) auf das Ritzel (6, 7) des Zahnraduntersetzungsgetriebes einschaltbar sind, wobei eines der hydrodynamischen Getriebe als hydrodynamische Kupplung (10, 11) und eines als hydrodynamischer Wandler (12, 13) ausgebildet ist.

0017761

## Schiffsgetriebe mit mechanischen und hydrodynamischen Elementen

Die Erfindung betrifft Schiffsgetriebe, bestehend aus einem Zahnraduntersetzungsgetriebe und aus wenigstens zwei hydrodynamischen Getrieben, die wahlweise zur Übertragung des Drehmomentes von einer Antriebsmaschine auf ein Ritzel des Zahnraduntersetzungsgetriebes einschaltbar sind.

Nach den Begriffsbestimmungen der VDI-Richtlinie 2153 wird bei hydrodynamischen Getrieben zwischen Kupplungen, Wandlern und Bremsen unterschieden. Gebräuchlich sind hydrodynamische Getriebe, bei denen ein Pumpenrad (Primärteil) und ein Turbinenrad (Sekundärteil) nach den Föttinger-Prinzip in einem gemeinsamen Gehäuse arbeiten. Hydraulische Kupplungen und hydraulische Bremsen weisen nur ein Pumpenrad und ein Turbinenrad auf. Hydrodynamische Wandler erfordern dagegen ein die Strömung umlenkendes zusätzliches Schaufelrad als Reaktionsglied.

Es sind Schiffsgetriebe bekannt, bei denen einzelne oder auch mehrere Antriebsmaschinen unter Zwischenschaltung hydrodynamischer Kupplungen mit einem gemeinsamen mechanischen Getriebe kuppelbar sind, so daß Drehzahldifferenzen der Antriebsmaschine, Torsionsschwingungen und Belastungsstöße durch die hydrodynamischen Kupplungen kompensiert werden (DE-PS 8 00 159). Andere bekannte Anordnungen verwenden hydrodynamische Kupplungen nicht nur für die der Vorwärtsfahrt zugeordneten Getriebeteile, sondern auch in Verbindung mit einem Umsteuergetriebe für die Rückwärtsfahrt, so daß je nach Fahrtrichtung jeweils eine Kupplung gefüllt und eine Kupplung entleert ist (DE-PS 12 45 790).

Hydrodynamische Wandler werden demgegenüber in Schiffsantrieben meistens anstelle mechanischer Getriebe vorgesehen. Generell ist jedoch auch die Anordnung eines hydrodynamischen Wandlers in Verbindung mit einem Zahnradgetriebe bekannt. Schließlich gehört es zum Stande der Technik, hydrodynamische Wandler mit einer Umkehrstufe für die Drehrichtung auszubilden, um z. B. die Rückwärtsfahrt eines Fahrzeugs zu ermöglichen, wobei die Entleerung bzw. die Füllung des Wandlers die Wirkung einer hydrodynamischen Kupplung haben.

Es ist Aufgabe der Erfindung, ein Schiffsgetriebe für höhere Drehmomentbelastungen in der Weise auszubilden, daß einerseits die Vorteile mechanischer Getriebe-Untersetzungsstufen und hydrodynamischer Getriebeteile erhalten bleiben, andererseits aber unabhängig von der Antriebsmaschinenleistung zur Verbesserung der Manövriereigenschaften unter schwierigen Fahrtbedingungen auf die Schraubenwelle unterschiedliche Drehmomente mit unterschiedlichen Drehzahlen gegeben werden können.

Zur Lösung dieser spezifischen Aufgabe ist erfindungsgemäß im wesentlichen vorgesehen, daß bei einem Schiffsgetriebe der eingangs genannten Gattung die hydrodynamischen Getriebe unterschiedlich ausgelegt sind. Eine solche Ausbildung gestattet in einer einfachen Anordnung die Verwendung einer hydrodynamischen Kupplung oder eines hydrodynamischen Wandlers zur Übertragung der Maschinenleistung auf die Schraubenwelle, so daß unterschiedliche Drehmomente bei unterschiedlicher Drehzahl auf die Schraubenwelle ausgeübt werden kann. Die Steuerung erfolgt dabei durch Füllung der Kupplung oder des Wandlers, wobei der nicht benutzte Getriebeteil ohne Belastung leer mitträgt. Die Kupplung dient vorteilhaft für die Leistungsübertragung während der Fahrt in freien Gewässern. Dagegen wird der Wandler zur Leistungsüber-

0017761

tragung bei Fahrten in schwierigen Gewässern genutzt. Insbesondere bei der Fahrt des Schiffes in arktischen Gewässern mit einer Eisbildung an der Oberfläche bringt die Verwendung eines mit Merkmalen der Erfindung ausgestatteten Getriebes besondere Vorteile, weil die Auslegung des Wandlers eine Anpassung an diese besonderen Fahrtbedingungen erlaubt, so daß bei eingeschaltetem Wandler ein höheres Drehmoment mit geringerer Drehzahl auf die Schraubenwelle übertragen werden kann.

Bei einer abgeänderten Ausführungsform kann in Verbindung mit einem Zahnradgetriebe und einem hydrodynamischen Wandler für die Vorwärtsfahrt anstelle der zuvor erwähnten hydrodynamischen Kupplung ein weiterer hydrodynamischer Wandler vorgesehen sein. Vorteilhaft wird dieser Wandler als Rückwärtswandler ausgebildet. Dadurch wird der Vorteil erreicht, daß eine Drehmomentüberhöhung mit fallender Propellerdrehzahl nicht nur bei der Vorwärtsfahrt sondern auch bei der Rückwärtsfahrt möglich ist. Eine solche Anordnung vermeidet in jeder Drehrichtung unzulässige Drehzahldrückungen bei Propellerblockierungen. Ein kombiniertes Getriebe mit den vorstehend erläuterten Ausbildungsmerkmalen eignet sich vor allem für Schiffe, die überwiegend Fahrtrouten in schwerem Eis befahren.

Eine andere Variante eines Schiffsgetriebes mit den wesentlichen Gestaltungsmerkmalen nach der Erfindung sieht vor, daß ein mechanisches Zahnradgetriebe mit hydrodynamischen Drehmomentwandlern für die Vorwärtsfahrt und gegebenenfalls auch für die Rückfahrt außerdem mit einer schaltbaren Überbrückungskupplung ausgerüstet ist, so daß das Schiff in freiem Fahrwasser bei geschlossener Überbrückungskupplung mit einem besseren Wirkungsgrad der Antriebsanlage betrieben werden kann. Bei einem solchen Schiffsgetriebe empfiehlt sich die Anordnung der hydrodynamischen Getriebeelemente in einem doppelten Vorgelege parallel zur Achse der Motorwelle.

Die konstruktive Ausbildung verschiedener Ausführungsvarianten ergibt sich aus Ausführungsbeispielen, die auf der Zeichnung schematisch dargestellt sind und nachfolgend beschrieben werden. Auf der Zeichnung zeigen:

> Figur 1 ein Doppelgetriebe für zwei Antriebs-
> maschinen und eine Abtriebswelle mit
> hydrodynamischer Kupplung und hydrody-
> namischen Wandler,

> Figur 2 eine Anordnung entsprechend Figur 1,
> jedoch mit einem Rückwärtswandler
> anstelle einer Kupplung und

> Figur 3 eine Anordnung mit Vorwärtswandler,
> Rückwärtswandler und Überbrückungs-
> kupplung.

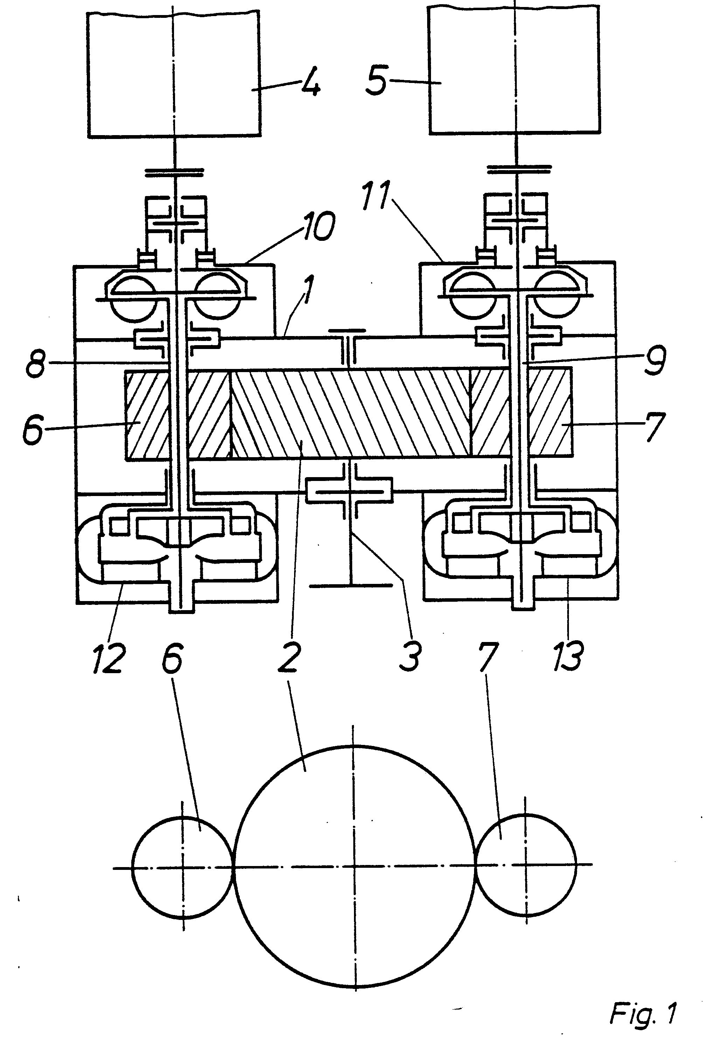

Bei dem Ausführungsbeispiel nach Figur 1 ist in einem Getriebegehäuse 1 ein Zahnradübersetzungsgetriebe vorgesehen, dessen Großrad 2 auf der Abtriebswelle, z.B. der Propellerwelle 3 eines Schiffsantriebes angeordnet ist. Jedem der beiden Antriebsmaschinen 4 und 5 ist ein Ritzel 6 bzw. 7 zugeordnet. Die in Achsrichtung durchbohrten Ritzel 6 und 7 werden in Quillshaftbauweise je von einer Welle 8 bzw. 9 durchgriffen, die mit der Motorwelle der beiden Antriebsmaschinen 4 und 5 verflanscht ist. An sich gegenüberliegenden Seiten ist auf jeder Antriebsmaschinenseite eine
hydrodynamische Kupplung 10 bzw. 11 und ein hydrodynamischer
Wandler 12 bzw. 13 vorgesehen. Die Pumpenräder der Kupplungen
10 und 11 sowie der Wandler 12 und 13 sind durch die Wellen
8 bzw. 9 mit den Motorwellen verbunden. Die Turbinenräder
dagegen sind mit dem hohlgebohrten Ritzeln 6 und 7 verflanscht,
so daß die Ritzel wahlweise über die Kupplung 10 bzw. 11 oder
über die Wandler 12 bzw. 13 mit erhöhtem Drehmoment bei gedrückter Drehzahl angetrieben werden können.

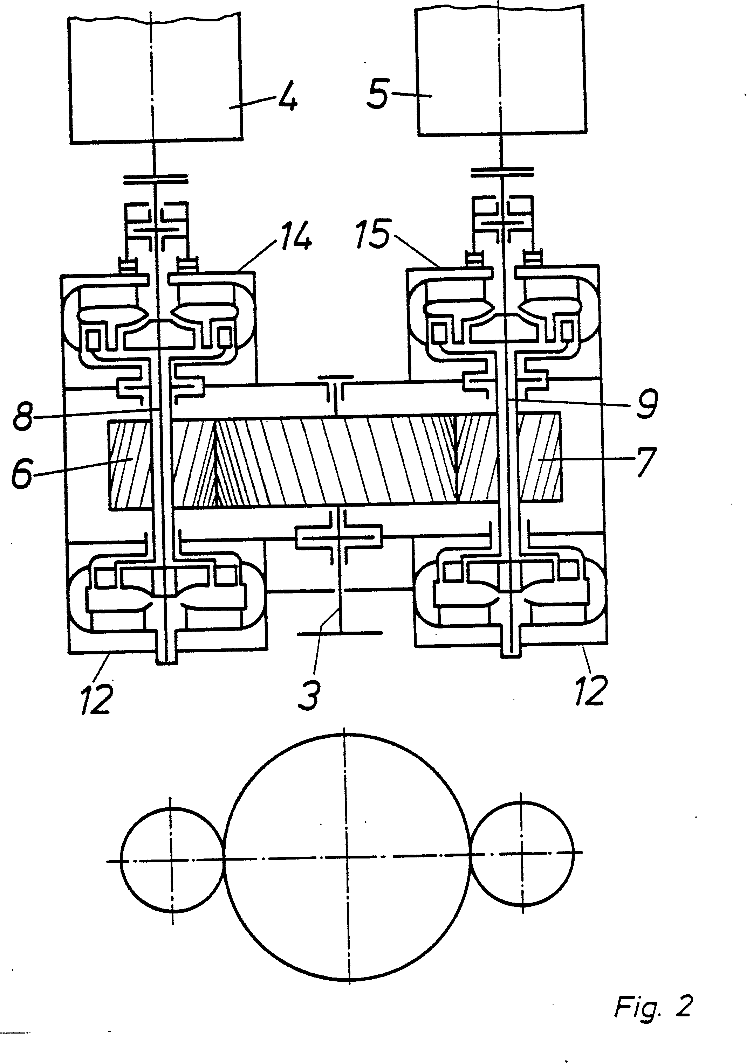

Bei dem Ausführungsbeispiel entsprechend Figur 2 ist anstelle
der hydrodynamischen Kupplungen 10 bzw. 11 ein weiterer hydrodynamischer Wandler 14 bzw. 15 angeordnet, der als Umkehrwandler
ausgebildet ist. Umkehrwandler in geeigneter Bauweise gehören
zum Stande der Technik und sind nicht Gegenstand der Erfindung.
Eine solche Anordnung erlaubt die Drehmomentüberhöhung nicht nur
bei der Vorwärtsfahrt sondern auch bei der Rückwärtsfahrt, wobei
mit fallender Propellerdrehzahl das auf die Welle 3 ausgeübte
Drehmoment steigt und unzulässige Drehzahldrückungen bei Blockierungen des Propellers vermieden werden. Ein solches Schiffsgetriebe
ist besonders für Schiffe geeignet, die überwiegend unter extremen
Bedingungen in schwierigen Fahrtgebieten operieren.

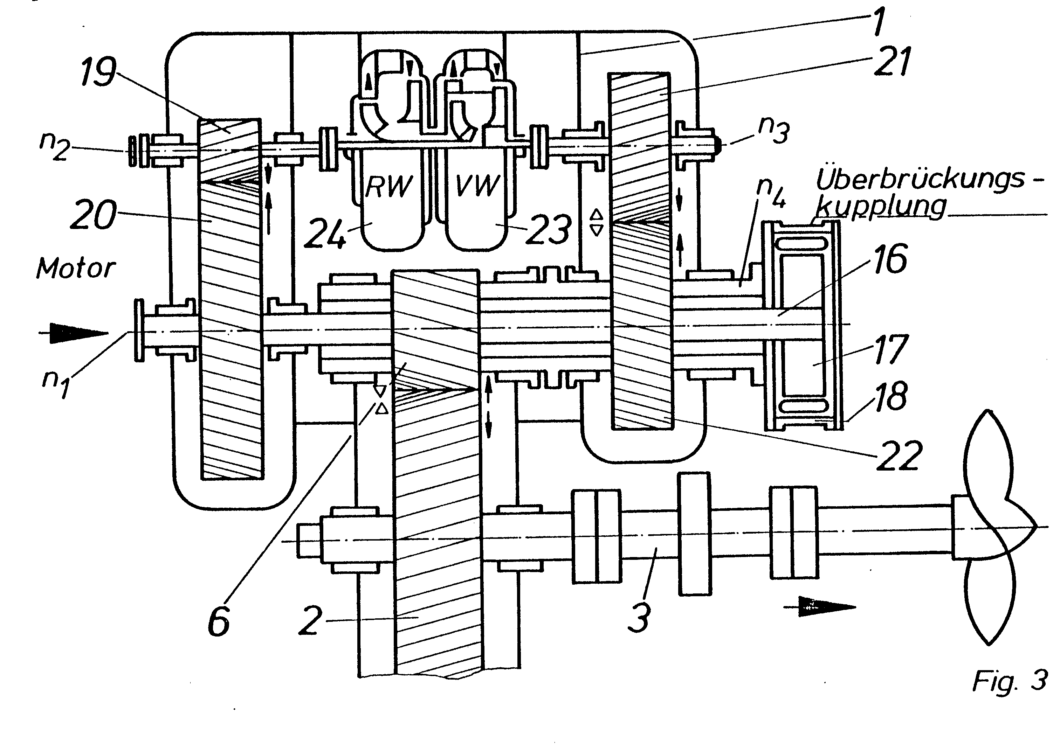

Wechselt dagegen die Fahrtroute von schwierigen Bedingungen in
längere Reisen in freiem Wasser, ist unter Umständen eine eine Anordnung vorteilhaft, wie sie in Figur 3 dargestellt ist, und zwar in Abweichung von den Anordnungen nach den Figuren 1 und 2, jedoch nur halbseitig. Das große Getrieberad 2 des Zahnradübersetzungsgetriebes ist auf der Propellerwelle 3 bzw. auf einem Teilstück der Wellenleitung befestigt. Es wird über das Ritzel 6 angetrieben, welches hohl ausgeführt ist und von einer Welle 16 eines doppelten Vorgeleges durchgriffen wird. Diese Welle ist an dem einen Ende mit der Welle eines nicht dargestellten Antriebsmotors verflanscht und trägt an der gegenüberliegenden Seite den Primärteil 17 einer Überbrückungskupplung, deren Sekundärteil 18 mit dem Ritzel 6 fest verbunden ist. Das Vorgelege besteht aus zwei Zahnradpaaren 19 und 20 bzw. 21 und 22. Das Zahnradpaar 19, 20 bildet das Eingangsvorgelege, wobei das Zahnrad 20 auf der Welle 16 angeordnet ist. Das entsprechende Zahnrad 22 des Ausgangsvorgeleges sitzt fest an dem Ritzel 6 des Zahnraduntersetzungsgetriebes. Die beiden Zahnräder 19 und 21 beider Zahnradpaare sind koaxial zueinander angeordnet, und zwischen ihnen befinden sich zwei hydrodynamische Wandler 23 und 24, von denen der eine als Vorwärtswandler und der andere als Rückwärtswandler in der zuvor schon beschriebenen Weise ausgebildet ist. Je nach Füllung des einen oder des anderen Wandlers ist eine Drehmomentübertragung zur Vorwärtsfahrt oder zur Rückwärtsfahrt möglich. Bei Füllung einer der beiden Wandler muß die Überbrückungskupplung 17, 18 geöffnet sein. Bei entleerten Wandlern 23 und 24 kann die Überbrückungskupplung 17, 18 zu direkten Übertragung des Drehmomentes von der Welle 16 auf das Ritzel 6 geschlossen werden. Die

Überbrückungskupplung kann in an sich bekannter Weise ein torsionselastisches Zwischenglied aufweisen. Die Anordnung entsprechend Figur 3 kann ebenfalls wie Anordnungen nach den Figuren 1 und 2 als Doppelgetriebe für zwei Antriebsmaschinen und eine Abtriebswelle ausgeführt werden. Denkbar sind auch Getriebeausbildungen für Drei-und Viermotorenanlagen. Symbolisch dargestellt sind Zahnräder mit einfacher Schrägverzahnung, jedoch ist mit gleichem Vorteil, insbesondere bei hohen Antriebsleistungen, jede andere Verzahnungsart, vor allem eine Pfeilverzahnung anwendbar.

- 9 -

0017761

## Pantentansprüche

1. Schiffsgetriebe, bestehend aus einem Zahnraduntersetzungsgetriebe, aus wenigstens zwei hydrodynamischen Getrieben,
die wahlweise zur Übertragung des Drehmoments von der
Antriebsmaschine auf das Ritzel des Zahnraduntersetzungsgetriebes einschaltbar sind, dadurch gekennzeichnet, daß
die hydrodynamischen Getriebe unterschiedlich ausgelegt
sind.

2. Schiffsgetriebe nach Anspruch 1, dadurch gekennzeichnet,
daß die hydrodynamischen Getriebe einer Drehrichtung des
Ritzels (6, 7) des Zahnraduntersetzungsgetriebes zugeordnet sind und daß eines der hydrodynamischen Getriebe als
hydrodynamische Kupplung (10, 11) und eines als hydrodynamischer Wandler (12, 13) ausgebildet ist.

3. Schiffsgetriebe nach Anspruch 1, dadurch gekennzeichnet,
daß zwei hydrodynamische Getriebe als Wandler ausgebildet
sind, von denen der eine ein Umkehrwandler ist.

4. Schiffsgetriebe nach den Ansprüchen 1 bis 3, dadurch gekennzeichnet, daß in an sich bekannter Weise eine Überbrückungskupplung (17, 18) zwischen der Eingangswelle (16) der hydrodynamischen Getriebe (23, 24) und dem Ritzel (6) des Zahnraduntersetzungsgetriebes vorgesehen ist.

*Fig. 1*

0017761

4

5

14    15

8    9

6    7

12    3    12

Fig. 2

Fig. 3

0017761

## Europäisches Patentamt

# EUROPÄISCHER RECHERCHENBERICHT

Nummer der Anmeldung

EP 80 10 1316

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| X | GB - A - 547 330 (PARSONS MARINE STEAM TURBINE CY.) <br> * Insgesamt * <br> -- | 1,3,4 | B 63 H 23/30 <br> F 16 H 41/22 |
| X | DE - A - 1 500 520 (VOITH GETRIEBE) <br> * Seite 12, Zeile 36 - Seite 14, Zeile 1; Figuren 6,7 * <br> -- | 1,2 | |
| X | US - A - 2 018 616 (MARTYRER) <br> * Seite 3, linke Spalte, Zeile 13 - rechte Spalte, Zeile 9; Figur 5 * <br> -- | 1,2 | **RECHERCHIERTE SACHGEBIETE (Int. Cl. 3)** <br><br> B 63 H <br> F 16 H |
| X | DE - C - 658 757 (AB LJUNGSTROMS) <br> * Insgesamt * <br> -- | 1,2 | |
| A | DE - C - 405 999 (VULKAN WERKE) <br> * Insgesamt * <br> -- | 1 | |
| A | CH - A - 452 380 (MAYBACH MERCEDES) <br> * Insgesamt * <br> ---- | 1,4 | |

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-07-1980 | DE SCHEPPER |

EPA form 1503.1 06.78